# EUROPÄISCHE PATENTSCHRIFT

(11) **EP 2 812 095 B1**
(45) Veröffentlichungstag und Bekanntmachung des Hinweises auf die Patenterteilung: **06.07.2016**
(21) Anmeldenummer: 13706409.3
(22) Anmeldetag: 01.02.2013
(51) Int. Cl.: B01D 53/02, B01D 53/62, A62B 19/02, A62B 23/00

(54) **ADSORBENTIENKOMBINATION FÜR FILTER KOMBINIERTER BRAND- UND INDUSTRIE-FLUCHTFILTERGERÄTE UND DEREN VERWENDUNG**
COMBINATION OF ADSORBENTS FOR FILTERS OF COMBINED FIRE AND INDUSTRIAL EMERGENCY FILTER ESCAPE DEVICES AND USE THEREOF
ASSOCIATION D'ADSORBANTS POUR FILTRES D'APPAREILS AUTOSAUVETEURS À FILTRE COMBINÉS POUR LA PROTECTION EN CAS D'INCENDIES ET D'ACCIDENTS INDUSTRIELS, ET UTILISATION DE CES APPAREILS

(30) Priorität: 06.02.2012 DE 102012002113
(43) Veröffentlichungstag der Anmeldung: 17.12.2014
(73) Patentinhaber: Dräger Safety AG & Co. KGaA, 23560 Lübeck (DE)
(72) Erfinder: AMMANN, Klaus, 23611 Sereetz (DE); WIRSCHAL, Julia, 23617 Stockelsdorf (DE)
(74) Vertreter: Müller Schupfner & Partner Patent- und Rechtsanwaltspartnerschaft mbB
(86) Internationale Anmeldenummer: PCT/DE2013/000056
(87) Internationale Veröffentlichungsnummer: WO 2013/117179

(56) Entgegenhaltungen:
- EP-A2- 0 124 263
- WO-A2-02/085426
- US-A- 5 058 578
- US-A- 5 315 987

## Beschreibung

Die vorliegende Erfindung betrifft eine Adsorbentienkombination für Filter kombinierter Brand- und Industrie-Fluchtfiltergeräte entsprechend einerseits EN 403 und ANSI/ISEA 110 sowie andererseits DIN 58647-7, enthaltend eine Aktivkohleschicht und eine Schicht eines Oxidgemischs, einen Atemschutzfilter enthaltend die Adsorbentienkombination und die Verwendung des Atemschutzfilters bzw. der Adsorbentienkombination.

### Stand der Technik

Bei Fluchtfiltergeräten unterscheidet man zwischen Brandflucht- und Industriefluchtfiltergeräten. Während die Filter der Brandfluchtgeräte in erster Linie vor Kohlenmonoxid (CO) schützen, sind die Filter der Industriefluchtgeräte auf einen Schutz vor unterschiedlichen Industriegasen ausgelegt. Dies spiegelt sich auch in den entsprechenden Normen wider. So wird beispielsweise in der EN 403 (Atemschutzgerät für Selbstrettung - Filtergeräte mit Haube zur Selbstrettung bei Bränden) das erforderliche Gasaufnahmevermögen bezüglich CO beschrieben. Gleiches gilt für den US-amerikanischen Standard ANSI/ISEA 110 (American National Standard for Air-Purifying Respiratory Protective Smoke Escape Devices). Gegenüber der EN 403 unterscheidet sich dieser in erster Linie durch eine zusätzliche Anforderung für die Gase Cyclohexan und Schwefeldioxid. Demgegenüber wird in der DIN 58647-7 (Atemschutzgeräte für Selbstrettung - Fluchtfiltergeräte) das Aufnahmevermögen für die als ABEK-Gase bekannten Substanzen beschrieben. Die Abkürzung ABEK steht für organische Gase und Dämpfe mit einem Siedepunkt > 65°C (A), anorganische Gase und Dämpfe ausgenommen Kohlenmonoxid (B), Schwefeldioxid und andere saure Gase und Dämpfe (E) und Ammoniak und organische Ammoniak-Derivate (K). Für die vorliegende Erfindung sind insbesondere das Adsorptionsvermögen für Cyclohexan und Chlor neben NH₃, H₂S, HCN und/oder SO₂ von Bedeutung.

Aus unterschiedlichen Gesichtspunkten ist es vorteilhaft, einen Filtertyp bereitzustellen, der die Eigenschaften von Brand- und Industriefluchtfiltergerät in sich vereint. Dazu müssen geeignete Adsorbentienkombinationen bereitgestellt werden.

Stand der Technik für die Füllung von CO-Fluchtfiltern ist Hopkalit (auch Hopcalit oder Hopcalite genannt). Hopkalit ist eine Bezeichnung für Oxidgemische, die hauptsächlich aus Mangandioxid und Kupfer(II)oxid bestehen. Hopkalit katalysiert die Oxidation von giftigem Kohlenmonoxid (CO) zum Kohlendioxid (CO₂) durch (Luft-)Sauerstoff (O₂) bei Raumtemperatur.

Adsorbentienkombinationen von Hopkalit mit Aktivkohlen sind bereits bekannt. So beschreibt das Deutsche Patent DE 1067691 B einen Atemfilter zum Schutz gegen Kohlenmonoxid, bei dem die Standzeit des Hopkalit gegenüber Kohlenmonoxid dadurch verlängert wird, dass eine mit hygroskopischen Substanzen imprägnierte Aktivkohle dem Hopkalit vorgeschaltet wird. Die imprägnierte Aktivkohle dient also als Trockenmittel. Derartige Trockenmittel werden üblicherweise sehr hoch imprägniert, so dass die Adsorptionsfähigkeit gegenüber anderen Gasen nur noch schwach bis gar nicht mehr vorhanden ist.

In der DE 10152785 A1 wird eine Adsorbentienkombination von Hopkalit und einer Aktivkohle beschrieben. Bei einem schichtförmigen Filteraufbau ist die Aktivkohleschicht dem Hopkalit vorgeschaltet. Die Aktivkohlekörner sind mittels eines Klebers miteinander verbunden. Zusätzliche Angaben zur Aktivkohle beschränken sich auf das Flächengewicht und die Korngröße. in der US 5 058 578 wird ebenfalls ein schichtartiger Aufban von mehren Lagen (Aktivkohle, Hopkalit, etc.) offenbart.

### Aufgabe der Erfindung

Aufgabe der vorliegenden Erfindung ist es, eine Adsorbentienkombination aus Aktivkohle und einem Oxidgemisch zur Verfügung zu stellen, die sowohl eine ABEK-Leistung nach DIN 58647-7 aufweist als auch eine CO-Leistung nach EN 403 und ANSI/ISEA 110. Dabei soll das zugehörige Filter- bzw. Adsorbentien-Volumen auf das unbedingt notwendige Maß beschränkt sein.

### Zusammenfassung der Erfindung

Diese Aufgabe wird durch eine Adsorbentienkombination für Filter kombinierter Brand- und Industrie-Fluchtfiltergeräte gelöst aufweisend eine Schicht nicht-imprägnierter Aktivkohle und eine Schicht eines Oxidgemischs enthaltend größer 40 Gew.% Mangan(IV)dioxid (MnO₂) und größer 20 Gew.% Kupfer(II)oxid (CuO), bezogen auf das eingesetzte Oxidgemisch, wobei die Aktivkohleschicht in Strömungsrichtung vor der Schicht des Oxidgemischs angeordnet ist, die Aktivkohle einen Wassergehalt von < 3 Gew.%, bevorzugt < 1,5 Gew.%, aufweist und die Menge an nicht-imprägnierter Aktivkohle zwischen 60 und 90 ml und die Menge des Oxidgemischs zwischen 150 bis 190 ml beträgt.

Bevorzugte Ausführungsformen sind Gegenstand der Unteransprüche oder nachfolgend beschrieben.

Es wurde überraschender Weise gefunden, dass zur Lösung der oben beschriebenen Aufgabe keine vergleichsweise aufwändig herzustellende imprägnierte Aktivkohle notwendig ist, sondern dass eine Adsorbentien-Kombination von nicht-imprägnierter Aktivkohle und einem Oxidgemisch, enthaltend Mangandioxid und Kupfer(II)oxid, zum Ziel führt.

Die erfindungsgemäße nicht-imprägnierte Aktivkohle besteht aus Aktivkohle-Granulat oder Formkohle. Derartige Aktivkohlen sind in der Lage bei hoher relativer Luftfeuchte, entsprechend ihrer Wasserdampf-Adsorptionsisotherme, auch eine gewisse Menge an Wasserdampf aufzunehmen. Der Wassergehalt der erfindungsgemäß verwendeten Aktivkohle liegt unterhalb von 3 Gew.%, bevorzugt unterhalb 1,5 Gew.%.

### Detaillierte Beschreibung der Erfindung

Der Wassergehalt der Aktivkohle ist für die Adsorptionseigenschaften der Adsorbentienkombination wichtig, da auf Grund der hygroskopischen Eigenschaften des Oxidgemischs die in der Aktivkohle vorhandene Feuchtigkeit innerhalb von kurzer Zeit praktisch vollständig auf das Oxidgemisch übergeht und so dessen Aktivität zur CO-Katalyse herabsetzt. Deshalb ist es wichtig, dass im gesamten System nur wenig Wasser enthalten ist. Je weniger Wasser die Aktivkohle enthält, umso weniger Oxidgemisch muss man für die gleiche Leistung einsetzen. Bei einem Volumen von 75 mL Aktivkohle entspricht ein Anteil von 3 Gew.% Wasser in etwa einem Gramm Wasser. Bei 5 Gew.% wären es 1,66 g Wasser. Wenn dieses Wasser auf die 180 mL Oxidgemisch übergeht, wären das im ersten Fall 0,6 Gew.% Wasser mehr auf dem Oxidgemisch und im zweiten Fall 1,0 Gew.% mehr. Das Oxidgemisch hat von vornherein einen Wassergehalt von 1 bis 2 %. Ab ca. 3,5 % Wassergehalt ist die Oxidgemisch-Leistung bereits merklich beeinträchtigt. Das heißt, bei 5 Gew.% Wassergehalt der Aktivkohle würde man schon relativ dicht an die kritische Wassergehaltsgrenze des Oxidgemischs gelangen.

Das Oxidgemisch enthält einen Anteil von größer 40 Gew.% Mangan(IV)dioxid (MnO₂) und einen Anteil größer 20 Gew.% Kupfer(II)oxid (CuO), vorzugsweise 65 +/- 10 Gew.% MnO₂ und 35 +/- 10 Gew.% CuO, besonders bevorzugt 65 +/- 5 Gew.% MnO₂ und 35 +/- 5 Gew.% CuO.

Der Wassergehalt des Oxidgemischs liegt vorzugsweise bei kleiner 3 Gew.%, besonders bevorzugt bei < 1,5 Gew.%. Neben Mangandioxid und Kupfer(II)oxid können weitere Oxide in dem Oxidgemisch enthalten sein, wie z.B. Cobalt(II)oxid (CoO, z.B. 5 bis 20 Gew.%) und/oder Silberoxid (Ag₂O, z.B. 1 bis 10 Gew.%).

Das Oxidgemisch kann durch physikalisches Mischen der (feinverteilten) Metalloxide, gemeinsame Fällung der Metalloxide bzw. Metallhydroxide, z.B. aus Metallsalzlösungen, ggf. kombiniert mit Redox-Reaktionen, oder thermische Zersetzung von Mischungen der Metallnitrate und Metallcarbonate hergestellt werden.

Das Oxidgemisch liegt vorzugsweise in Granulatform und in Substanz vor, ggf. aber auch als Formkörper oder geträgert.

Die Menge an Oxidgemisch, die die Gasrückhalte-Bedingungen der EN 403 bzw. ANSI / ISEA 110 erfüllt, ist in der Lage, die Anforderungen aus der DIN 58647-7 für H₂S, HCN, SO₂ und NH₃ zu erfüllen. Die Leistung bezüglich der beiden anderen gemäß DIN 58647-7 geforderten ABEK-Gase, Cyclohexan und Chlor, muss in der erfindungsgemäßen Adsorbentien-Kombination in erster Linie durch die Aktivkohle bereitgestellt werden. Die zusätzlichen Anforderungen von ANSI/ISEA für SO₂ fallen gegenüber den ABEK-Anforderungen der DIN 58647-7 nicht ins Gewicht.

Es ist für die vorliegende Erfindung von Vorteil, dass die Aktivkohle bei hohen relativen Feuchten ab ca. 60 % auch ein merkliches Aufnahmevermögen gegenüber Luftfeuchtigkeit aufweist. Da die Aktivkohle in Strömungsrichtung vor dem feuchtigkeitsempfindlichen Oxidgemisch platziert ist, wird die Haltezeit des Oxidgemischs gegenüber CO erhöht oder es kann die andernfalls erforderliche Menge an Oxidgemisch gesenkt werden.

Nach einer Ausgestaltung der vorliegenden Erfindung beträgt die Menge der Aktivkohle zur Anwendung in einem Atemschutzfilter etwa 75 ml (+/- 5 ml) und die Menge an Oxidgemisch etwa 180 ml (+/- 5 ml).

Brand- und Industrie-Fluchtfiltergeräte sind Geräte für den persönlichen Atemschutz. Solche Atemschutzgeräte können als Atemanschluss eine Vollmaske, Halbmaske, eine Haube mit innerer Halbmaske oder eine Mundstückgarnitur mit Beißzapfen und Nasenklemme aufweisen. Als Atemanschluss wird der Teil des Atemschutzgerätes bezeichnet, der die Atemwege des Atemschutzgeräteträgers mit den übrigen Teilen des Atemschutzgerätes verbindet und sie gegen die Umgebungsatmosphäre abschließt.

Die Kartusche kann eine Kartusche aus einem Metallblech sein. Unabhängig hiervon weist die Kartusche vorzugsweise zumindest zwei Siebböden zwischen denen die Adsorbentienkombination gelagert ist auf. Ggf. sind Aktivkohle und Oxidgemisch auch durch zumindest einen weiteren Siebboden getrennt. Soweit gewünscht kann der Aktivkohle in Strömungsrichtung betrachtet, ein Partikelfilter vorgeschaltet sein, z.B. in Form eines Faltenfilters aus einem Fasermaterial. Der Siebboden kann aus Metall, z.B. einem Drahtgerüst oder Kunststoff, ausgebildet sein. Auf den Siebboden kann ein Vlies aufgelegt sein.

### Versuchsdurchführung

Es wurden Versuche durchgeführt, deren Ergebnisse in der Tabelle 1 zusammengestellt sind. Der Wassergehalt der eingesetzten Aktivkohlen lag jeweils bei < 3 Gew.%. Aktivkohlen und Oxidgemisch wurden als Granulate eingesetzt. In Tabelle 1 ist für die Haltezeiten jeweils ein Zielwert aufgeführt, der auf der Anforderung aus der DIN 58647-7 basiert, aber zusätzlich noch einen Sicherheitsabstand von 5 Minuten aufweist.

Aus Tabelle 1 ist zu ersehen, dass von der im Beispiel 3 gewählten Zusammensetzung die Haltezeit-Zielwerte für alle betrachteten Schadstoffe ähnlich sicher erreicht werden. Demgegenüber fällt vor allem Beispiel 1 sowohl in den Absolut-Werten als auch in der Gleichmäßigkeit der Zielerreichung ab. Beispiel 2 fällt gegenüber Beispiel 3 ebenfalls ab. Außerdem zeigt Beispiel 4, dass bei Einsatz von z.B. mit CaCl₂ imprägnierter Aktivkohle zwar die CO-Leistung verbessert werden kann, dass aber andererseits die Cyclohexan-Adsorption sinkt und somit insgesamt die Ausgewogenheit der in Beispiel 3 verwirklichten Zielwert-Erreichung deutlich verschlechtert wird.

**Tabelle 1:**

| Haltezeiten von Adsorbentienkombinationen aus Aktivkohle und Oxidgemisch gegen ausgesuchte Schadstoffe (Filterdurchmesser 90 mm) | | | | | |
|---|---|---|---|---|---|
| | | C₆H₁₂-Haltezeit [min] entsprechend DIN 58647-7 | Cl₂-Haltezeit [min] entsprechend DIN 58647-7 | NH₃-Haltezeit [min] entsprechend DIN 58647-7 | CO-Haltezeit [min] entsprechend EN 403 |
| Beispiel | Zielwert [min] → Kohle / Oxidgemisch [mL] | 20 | 20 | 20 | 20 |
| 1** | 50 / 200 | 18 | 17 | 28 | 25 |
| 2 | 65 / 175 | 22 | 19 | 24 | 21 |
| 3 | 75 / 180 | 24 | 23 | 26 | 24 |
| 4** | 75^{°)}/180 | 19 | 21 | 24 | 32 |

| | | | | | |
|---|---|---|---|---|---|
| *): Aktivkohle mit 30 g/L CaCl₂ (Trockenmittel-Imprägnierung) **): Vergleichsbeispiel | | | | | |

Die Norm EN 403 beschreibt, dass die Durchbruchszeit eines Filters für Brandfluchthauben bei 2500 ppm CO, 30 Umin Atemminutenvolumen und einer Luftfeuchtigkeit von 20,7 g/m³ größer/gleich 15 Minuten sein muss. Es hat sich bei Geräten auf dem Markt gezeigt, dass zur Erfüllung dieser Forderung, je nach Filterauslegung, Hopkalitmengen von 150 bis 200 mL notwendig sind. Will man neben der EN 403 noch die Forderungen aus der Industriefluchtfiltergeräte -Norm DIN 58647-7 erfüllen, muss zusätzlich ein bestimmtes Volumen an Aktivkohle zugefügt werden. In Summe sind deutlich mehr als 200 mL an Adsorbens-Volumen für diese Aufgabe erforderlich.

Vergleicht man die Beispiele in der Tabelle 1 miteinander, so wird deutlich, dass ein ausgewogenes Volumenverhältnis von Aktivkohle und Oxidgemisch wichtig ist.

Im Beispiel 1 mit 50 mL Aktivkohle und 200 mL Oxidgemisch stellt sich eine ungleichmäßige und gleichzeitig nur unvollständige Zielerreichung für die Haltezeiten ein. Demgegenüber sind im Beispiel 3 mit 75 mL Aktivkohle und 180 mL Oxidgemisch in etwa gleiche Haltezeiten, die allesamt die Zielzeit erreichen, vorhanden, obwohl sich gegenüber dem Beispiel 1 das Gesamtvolumen des Adsorbens nur geringfügig verändert hat; Beispiel 1: 250 mL Gesamtvolumen und Beispiel 3: 255 mL Gesamtvolumen.

Vergleicht man die Haltezeiten des Beispiels 4 mit imprägnierter Aktivkohle mit den Haltezeiten vom Beispiel 3 mit nicht imprägnierter Aktivkohle, dann liefert die Adsorbentienkombination nach Beispiel 3, mit Ausnahme von CO, verbesserte Haltezeiten, die alle oberhalb des Zielwerts liegen.

## Patentansprüche

1. Adsorbentienkombination für Filter kombinierter Brand- und IndustrieFluchtfiltergeräte aufweisend eine Schicht nicht-imprägnierter Aktivkohle und eine Schicht eines Oxidgemischs enthaltend größer 40 Gew.% Mangan(IV)dioxid (MnO₂) und größer 20 Gew.% Kupfer(II)oxid (CuO), bezogen auf das eingesetzte Oxidgemisch, **dadurch gekennzeichnet, dass**
die Aktivkohleschicht in Strömungsrichtung vor der Schicht des Oxidgemischs angeordnet ist, wobei die Aktivkohle einen Wassergehalt von
< 3 Gew.% aufweist,
wobei die Menge an nicht-imprägnierter Aktivkohle zwischen 60 und 90 ml und die Menge des Oxidgemischs zwischen 150 bis 190 ml beträgt.

2. Adsorbentienkombination nach Anspruch 1, **dadurch gekennzeichnet, dass** der Wassergehalt des Oxidgemischs bei kleiner 3 Gew.%, vorzugsweise bei kleiner 1,5 Gew.%, liegt.

3. Adsorbentienkombination gemäß zumindest einem der Ansprüche 1 oder 2, wobei das Oxidgemisch zumindest folgende Oxide enthält 65 +/- 10 Gew.% MnO₂ und 35 +/- 10 Gew.% CuO, vorzugsweise 65 +/- 5 Gew.% MnO₂ und 35 +/-5 Gew.% CuO.

4. Adsorbentienkombination nach Anspruch 3, **dadurch gekennzeichnet, dass** die Menge an Aktivkohle etwa 75 mL ist und die Menge an Oxidgemisch 180 mL beträgt.

5. Atemschutzfilter enthaltend die Adsorbentienkombination gemäß zumindest einem der Ansprüche 1 bis 4.

6. Verwendung der Adsorbentienkombination gemäß zumindest einem der Ansprüche 1 bis 4 in einem kombinierten Brand- und Industrie-Fluchtfiltergerät.

7. Verwendung des Atemschutzfilters nach Anspruch 5 in Form einer aufsetzbaren und/oder austauschbaren Kartusche in einem kombinierten Brand- und Industrie-Fluchtfiltergerät.

8. Verwendung des Atemschutzfilters nach Anspruch 7, wobei das kombinierte Brand- und Industrie-Fluchtfiltergerät eine Vollmaske, Halbmaske, eine Haube mit innerer Halbmaske oder eine Mundstückgarnitur mit Beißzapfen und Nasenklemme ist und die Kartusche auf eine Atemlufteinlassöffnung aufgesetzt ist.

## Claims

1. Combination of adsorbent materials for filter of combined smoke and industrial filtering escape devices, comprising a layer of non-impregnated activated carbon and a layer of an oxide mixture containing more than 40 wt.% manganese(IV) dioxide (MnO₂) and more than 20 wt.% copper(II) oxide (CuO), based on the mixture of oxides used, **characterized in that**,
the active carbon layer is arranged in flow direction in front of the layer of the oxide mixture wherein the activated carbon has a water content of <3 wt.%,
wherein the amount of non-impregnated activated carbon is between 60 and 90 mL and the amount of the oxide mixture is between 150 to 190 mL.

2. Combination of adsorbent materials according to claim 1, **characterized in that** the water content of the oxide mixture is less than 3 wt.%, preferably less than 1.5 wt.%.

3. Combination of-adsorbent materials according to at least one of claims 1 or 2, wherein the oxide mixture contains at least the following oxides 65 +/- 10 wt.% MnO₂ and 35 +/-10 wt.% CuO, preferably 65 +/- 5 wt.% MnO₂ and 35 +/- 5 wt.% CuO.

4. Combination of adsorbent materials according to claim 3, **characterized in that** the amount of activated carbon is 75 mL and the amount of oxide mixture 180 mL.

5. Respirator filter containing the combination of adsorbent materials according to at least one of claims 1 to 4.

6. Use of the combination of adsorbent materials according to at least one of claims 1 to 4 in a combined smoke and industrial filtering escape device.

7. Use of the respirator filter according to claim 5 in the form of an attachable and/or replaceable cartridge in a combined smoke and industrial filtering escape device.

8. Use of the respirator filter according to claim 7, wherein the combined smoke and industrial filtering escape device is a full face mask, half mask, a hood with inner half mask or a mouthpiece assembly with bite plate and nose clip and the cartridge is placed on a breathing air inlet opening.

## Revendications

1. Combinaison d'adsorbants pour filtres d'appareils autosauveteurs à filtre combinés pour la protection en cas d'incendies et d'accidents industriels, comprenant une couche de charbon actif non imprégné et une couche d'un mélange d'oxydes contenant plus de 40 % en poids de dioxyde de manganèse (IV) (MnO₂) et plus de 20 % en poids d'oxyde de cuivre (II) (CuO), par rapport au mélange d'oxydes employé, **caractérisée par le fait que** la couche de charbon actif est disposée, dans la direction d'écoulement, avant la couche du mélange d'oxydes, le charbon actif présentant une teneur en eau de < 3 % en poids,
la quantité de charbon actif non-imprégné étant comprise entre 60 et 90 ml et la quantité du mélange d'oxydes étant comprise entre 150 et 190 ml.

2. Combinaison d'adsorbants selon la revendication 1, **caractérisée par le fait que** la teneur en eau du mélange d'oxydes est inférieure à 3 % en poids, de préférence inférieure à 1,5 % en poids.

3. Combinaison d'adsorbants selon au moins l'une des revendications 1 ou 2, dans laquelle le mélange d'oxydes contient au moins les oxydes suivants : 65 +/- 10 % en poids de MnO₂ et 35 +/- 10 % en poids de CuO, de préférence 65 +/- 5 % en poids de MnO₂ et 35 +/- 5 % en poids de CuO.

4. Combinaison d'adsorbants selon la revendication 3, **caractérisée par le fait que** la quantité de charbon actif est de 75 mL et la quantité de mélange d'oxydes est de 180 mL.

5. Filtre de protection respiratoire contenant la combinaison d'adsorbants selon au moins l'une des revendications 1 à 4.

6. Utilisation de la combinaison d'adsorbants selon au moins l'une des revendications 1 à 4 dans un appareil autosauveteur à filtre combiné pour la protection en cas d'incendies et d'accidents industriels.

7. Utilisation du filtre de protection respiratoire selon la revendication 5 sous la forme d'une cartouche apte à être placée et/ou apte à être remplacée dans un appareil autosauveteur à filtre combiné pour la protection en cas d'incendies et d'accidents industriels.

8. Utilisation du filtre de protection respiratoire selon la revendication 7, dans lequel l'appareil autosauveteur à filtre combiné pour la protection en cas d'incendies et d'accidents industriels est un masque complet, un demi-masque, une coiffe comportant un demi-masque intérieur ou un nécessaire à embout buccal comportant un tenon à mordre et un pince-nez, et la cartouche est placée sur une ouverture d'entrée d'air respiratoire.
